**Europäisches Patentamt**

**European Patent Office**

**Office européen des brevets**

(19)

(11) Veröffentlichungsnummer: **0 120 318**
**B1**

(12)     # EUROPÄISCHE PATENTSCHRIFT

(45) Veröffentlichungstag der Patentschrift:
20.11.86

(51) Int. Cl.⁴: **F 16 K  11/04**

(21) Anmeldenummer: **84101985.4**

(22) Anmeldetag: **24.02.84**

(54) **Umschaltventil.**

(30) Priorität: **28.02.83  DE 3306986**

(43) Veröffentlichungstag der Anmeldung:
**03.10.84 Patentblatt 84/40**

(45) Bekanntmachung des Hinweises auf die Patenterteilung:
**20.11.86 Patentblatt 86/47**

(84) Benannte Vertragsstaaten:
**AT BE CH DE FR GB IT LI NL SE**

(56) Entgegenhaltungen:
**DE - A - 1 675 520**
**DE - A - 2 815 575**
**DE - C - 2 739 196**
**GB - A - 1 518 678**
**US - A - 3 906 983**

(73) Patentinhaber: **FRIEDRICH GROHE
ARMATURENFABRIK GmbH & CO, Hauptstrasse 137,
D-5870 Hemer 1 (DE)**

(72) Erfinder: **Heimann, Bruno, Bredde 20,
D-5758 Fröndenberg-Ardey (DE)**
Erfinder: **Rapp, Hans-Joachim, Auf dem Roland 8,
D-5800 Hagen 5 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Umschaltventil für Sanitärarmaturen zum Umschalten des ausfliessenden Wassers in veschiedene Ausläufe mit den im Oberbegriff des Anspruchs 1 angegebenen Merkmalen.

Ein Umschaltventil dieser Gattung ist aus der DE-C-2 739 196 bekannt. Bei diesem, auch bei sehr niedrigem Wasserstaudruck sicher arbeitenden Umschaltventil, ist eine relativ langgestreckte Bauweise erforderlich, so dass der Einsatz des Umschaltventils in Sanitärarmaturen aus Platz- und ästhetischen Gründen häufig problematisch ist.

Der Erfindung liegt die Aufgabe zugrunde, das eingangs beschriebene Umschaltventil weiter zu verbessern und insbesondere die Baulänge für einen vielseitigen Einsatz in Sanitärarmaturen zu verkürzen.

Diese Aufgabe wird erfindungsgemäss durch die im kennzeichnenden Teil des Anspruchs 1 angegebenen Merkmale gelöst.

Weitere Ausgestaltungen der Erfindung und die mit der Erfindung erzielbaren Vorteile sind den Ansprüchen 2 bis 5 zu entnehmen.

Ein Ausführungsbeispiel der Erfindung ist in der Zeichnung dargestellt und wird im folgenden näher beschrieben. Es zeigt

Fig. 1 ein Umschaltventil im Längsschnitt;

Fig. 2 das Umschaltventil gemäss Figur 1 in Draufsicht, teilweise in der Ebene II geschnitten.

In einem teilweise dargestellten Armaturengehäuse 1 einer Sanitärarmatur ist ein Umschaltventil mit einem im wesentlichen rotationssymmetrichen Umschaltventilgehäuse 2 eingefügt. Das Umschaltventilgehäuse 2 ist mit einem Zuströmkanal 10 versehen und hat ausserdem einen Wannenabfluss 51 und einen Brauseabfluss 61. Zentralsymmetrisch in dem Umschaltventilgehäuse 2 ist ein Hohlkolben 3 zwischen einem Ventilsitz 5 für die Wannenabflussöffnung und einem Ventilsitz 6 für den Brauseabfluss axial beweglich gelagert. Zur wahlweisen Abdichtung der Ventilsitze 5 und 6 trägt der Hohlkolben 3 an seiner Mantelfläche einen Doppelkegel 4. Koaxial zu dem Hohlkolben 3 ist eine aus dem Umschaltventilgehäuse 2 und dem Armaturengehäuse 1 herausgeführte Spindel 8 gedichtet gelagert. Die Spindel 8 taucht mit ihrem innenliegenden Kopfteil 81 in den Hohlkolben 3 ein und wird hierin begrenzt verschiebbar durch eine Verschlusskappe 31 gehalten. Die Spindel 8 ist von aussen über einen Betätigungsgriff 82 von Hand axial verschiebbar, wobei einerseits eine Feder 70 zwischen dem Armaturengehäuse 1 und dem Betätigungsgriff 82 und andererseits zwischen der Stirnseite des Umschaltventilgehäuses 2 und dem Kopfteil 81 eine Feder 71 angeordnet ist, wobei die Federn derart bemessen sind, dass die Spindel 8 in ihrer Ruhelage eine Mittelposition mit ihrem Kopfteil 81 in dem Hohlkolben 3 einnimmt. Der Hohlkolben 3 ist dabei in seinem Hohlraum so bemessen, dass der Doppelkegel 4 sowohl den Ventilsitz 5 als auch den Ventilsitz 6 verschliessen kann, ohne dass dabei die Spindel 8 aus ihrer Ruhestellung bewegt werden muss.

Zur Führung und Rückstellung des Hohlkolbens 3 in eine bevorzugte Wasserausflussrichtung beim Absperren des Wasserzuflusses, ist der Hohlkolben ausserdem mit einer im Bereich des Ventilsitzes 5 gehalterten Rückstellfeder 9 verbunden.

Das vorstehend beschriebene Umschaltventil hat folgende Wirkungsweise:

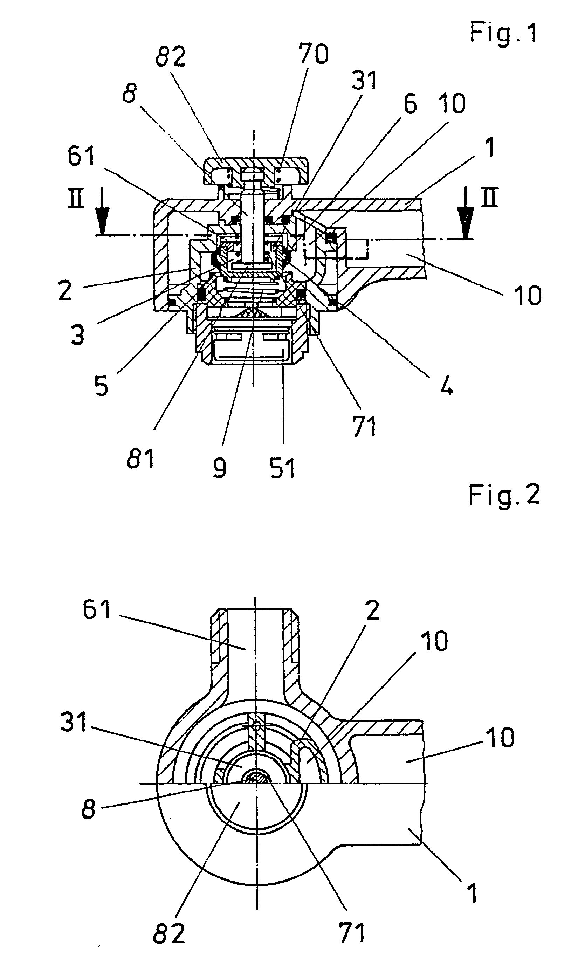

Das Frischwasser strömt durch den Zuflusskanal 10 aus dem Armaturengehäuse 1 radial an den Bereich des Doppelkegels 4 des Hohlkolbens 3 heran. Das in Figur 1 gezeigte Ventil befindet sich dabei in der bevorzugten Wasserauslassstellung. In diesem Fall strömt das Wasser über den Ventilsitz 5 in den koaxial im Ventil angeordneten Wannenabfluss 51. Wird nun bei zufliessendem Wasser der Betätigungsknopf 82 in das Armaturengehäuse 1 hineingedrückt, so gelangt die Stirnseite des Kopfteils 81 an den Boden des Hohlkolbens 3 und bewegt diesen entgegen der Rückstellfeder 9 auf den Ventilsitz 5 zu und verschliesst den Wannenabfluss 51. Gleichzeitig wird der Brauseabfluss 61 von dem Doppelkegel 4 freigegeben und der Wasserausfluss in die Brause umgelenkt. Die Rückstellkraft der Feder 9 ist dabei so bemessen, dass der Staudruck des über die Brause austretenden Wassers den Hohlkolben 3 in dieser Stellung hält. Wird nun der Wasserzufluss abgesperrt, so sinkt der Staudruck ab und nunmehr drückt die Rückstellfeder 9 den Hohlkolben 3 auf den Ventilsitz 6 und gibt damit wiederum die bevorzugte Ausflussrichtung, nämlich den Wannenabfluss frei. Wird es dagegen während des ausfliessenden Wassers erforderlich, den Wasserausfluss von dem Brauseabfluss in den Wannenabfluss umzustellen, so kann dieses durch ein Herausziehen des Betätigungsgriffs 82 aus dem Armaturengehäuse 1 vorgenommen werden. Hierbei gelangt das Kopfteil 81 an der Verschlusskappe 31 zu Anlage und führt den Hohlkolben 3 entgegen dem anstehenden Wasserdruck an den Ventilsitz 6 zurück.

Damit die empfindlich wirkende automatische Rückstellung nicht durch Ausscheidungen und Verunreinigungen aus dem durchfliessenden Wasser beeinträchtigt wird, insbesondere schwergängig wird, ist der Hohlkolben 3 an seiner Verschlusskappe 31 so ausgelegt, dass die Spindel 8 mit ihrem Kopfteil 81 mit relativ grossem Spiel aufgenommen werden kann. Der Hohlkolben 3 kann dadurch mit verhältnismässig grossem Spiel vergleichsweise lose in dem Umschaltventilgehäuse 2 gehaltert werden, wobei der Doppelkegel 4 eine gute Dichtwirkung an den Ventilsitzen 5 und 6 gewährleistet. Durch die Anordnung der Rückstellfeder 9 kann zusätzlich eine Führung des Hohlkolbens 3 in dem Umschaltventilgehäuse 2 erzielt werden. Selbstverständlich kann dabei auch das Umschaltventil ohne Rückstellfeder 9 betrieben werden, wobei der Hohlkolben 3 dann von der Schwerkraft in eine bevorzugte Schliesslage gebracht wird, wenn der Wasserzufluss abgesperrt wird.

Dadurch, dass die Spindel 8 von den Federn 70, 71 nach jeder Umschaltoperation selbsttätig in ihre neutrale Mittelstellung zurückgeführt wird, ist eine äusserst empfindliche automatische Rückstellung des Hohlkolbens 3 in eine bevorzugte Ausflussrichtung gewährleistet. Die erfahrungsgemäss auftretende gewisse Schwergängigkeit durch die Lagerung und Abdichtung der Spindel 8 hat keinerlei Einfluss auf das selbsttätige Umschalten des Hohlkolbens 3. Die Federn 70, 71 können bei der Bauweise im wesentlichen in dem Totraum des Betätigungsgriffs 82 und dem vom dem Hohlkolben beanspruchten Raum angeordnet werden, so dass eine äusserst kurze Bauweise erreichbar ist. Eine problemlose Zusammenmontage von Spindel 8 und Hohlkolben 3 mit Verschlusskappe 31 kann zweckmässig dadurch erreicht werden, dass zunächst die Spindel 8 mit dem Kopfteil 81 in den Hohlkolben 3 eingeführt wird und danach die Abdeckkappe 31 durch Verschweissen oder Kleben mit dem Hohlkolben 3 verbunden wird.

### Patentansprüche

1. Umschaltventil für Sanitärarmaturen zum Umschalten des ausfliessenden Wassers zu verschiedenen Ausläufen, z.B. Badewannen- (51) oder Brauseauslauf (61) wobei ein lose mit einer Betätigungseinrichtung in Verbindung stehendes, zwischen zwei Ventilsitzen (5, 6) bewegbares Ventilverschlussglied (3, 4) vorgesehen ist, welches sowohl von Hand mit der Betätigungseinrichtung (82, 8) als auch durch ein Abstellen des Wasserzuflusses automatisch in eine bevorzugte Ausflussstellung stellbar ist, wobei eine von einer federnden Einrichtung (70, 71) in eine neutrale Ruhestellung gedrängte, aus dem wasserführenden Bereich der Armatur herausgeführte Spindel (8) vorgesehen ist, mit der das Ventilverschlussglied (3, 4) stellbar ist, dadurch gekennzeichnet, dass als Ventilverschlussglied ein Hohlkolben (3) vorgesehen ist, an dessen Mantelfläche Dichtglieder (4), vorzugsweise ein Doppelkegel (4), für die wahlweise Absperrung der Ventilsitze (5, 6) vorgesehen sind, und die Spindel (8) mit einem Kopfteil (81) in dem Hohlkolben (3) begrenzt verschiebbar gehaltert ist, wobei der Hub des Kopfteils (81) im Holkolben (3) wenigstens dem Ventilhub entspricht, so dass in der neutralen Mittelstellung der Spindel (8) das Ventilverschlussglied ohne Bewegung der Spindel (8) jede der beiden Absperrstellungen einnehmen kann.

2. Umschaltventil nach Anspruch 1, dadurch gekennzeichnet, dass der Hohlkolben (3) von einer Rückstellfeder (9) im Umschaltventilgehäuse (2) geführt ist.

3. Umschaltventil nach den Ansprüchen 1 oder 2, dadurch gekennzeichnet, dass die Rückführung der Spindel (8) in die neutrale Ruhestellung von Federn (70, 71) zu beiden Seiten des Ventilgehäuses/Umschaltventilgehäuses (1, 2) erfolgt und die eine Feder (71) am Kopfteil (81) der Spindel (8), die andere Feder (70) im Betätigungsgriff (82) der Spindel (8) abgestützt ist.

4. Umschaltventil nach den Ansprüchen 1 oder 2 und 3, dadurch gekennzeichnet, dass das Kopfteil (81) der Spindel (8) in dem Hohlkolben (3) von einer am Hohlkolben (3) befestigbaren Verschlusskappe (31) in seiner Stecklage begrenzt verschiebbar gesichert ist.

5. Umschaltventil nach Anspruch 4, dadurch gekennzeichnet, dass die Verschlusskappe (31) mit dem Hohlkolben (3) verschweisst oder verklebt ist.

### Claims

1. Change-over valve for sanitary fittings for switching the outflowing water to different outlets, for example a bath outlet (51) or a shower outlet (61), there being provided a valve-closure member (3, 4) which is loosely connected to an actuating device and can be moved between two valve seats (5, 6), and which can be placed in a preferred outflow position both manually by means of the actuating device (82, 8) and automatically by switching off the water supply, there being provided a spindle (8) which is urged into a neutral rest position by a resilient device (70, 71) and extends out of the water-carrying area of the fitting, and by means of which the valve-closure member (3, 4) can be positioned, characterised in that there is provided as the valve-closure member a hollow piston (3) on the outer surface of which there are provided sealing members (4), preferably a double cone (4), for selectively shutting off the valve seats (5, 6), and a head portion (81) of the spindle (8) is mounted in the hollow piston (3) in such a manner that it can be displaced to a limited extent, the stroke of the head portion (81) in the hollow piston (3) corresponding at least to the valve lift, so that, in the neutral central position of the spindle (8), the valve-closure member can assume either of the two shutting-off positions without the spindle (8) being moved.

2. Change-over valve according to claim 1, characterised in that the hollow piston (3) is guided in the change-over valve housing (2) by a return spring (9).

3. Change-over valve according to claim 1 or 2, characterised in that the spindle (8) is returned to the neutral rest position by springs (70, 71) on both sides of the valve housing/change-over valve housing (1, 2), and one spring (71) is supported on the head portion (81) of the spindle (8) and the other spring (70) is supported in the actuating handle (82) of the spindle (8).

4. Change-over valve according to claim 1 or 2 and 3, characterised in that the head portion (81) of the spindle (8) in the hollow piston (3) is secured in its position by a locking cap (31), which can be fastened to the hollow piston (3), in such a manner that it can be displaced to a limited extent.

5. Change-over valve according to claim 4, characterised in that the locking cap (31) is welded or adhesively bonded to the hollow piston (3).

### Revendications

1. Soupape de commutation pour robinetterie d'installations sanitaires, en vue de commuter l'eau qui s'écoule, vers différentes sorties, par example: sortie sur baignoire (51) ou sortie pour douche (61); un organe de fermeture (3, 4) de la soupape mobile entre deux sièges de soupape (5, 6) étant prévu, qui est en liaison non-fixe avec un dispisitif de manœuvre, et qui peut être déplacé dans la position d'écoulement préférée aussi bien à la main avec le dispositif de manœuvre (82, 8) que de façon automatique par un arrêt de la venue d'eau, une tige (8) sortant de la zone de conduite d'eau des robinets étant prévue, qui est poussée par la force d'un disopsitif à ressorts (70, 71) dans une position de repos neutre, et qui permet de régler la position de l'organe de fermeture (3, 4) de la soupape, soupape de commutation caractérisé en ce qu'il est prévu, comme organe de fermeture de la soupape, un piston creux (3), à la surface latérale duquel sont prévus des éléments d'étanchement (4), de préférence un double cône (4), pour bloquer, au choix, les sièges de soupape (5, 6) et la tige (8) est maintenue de façon à pouvoir effectuer un déplacement limité avec une partie de tête (81) dans le piston creux (3), la course de la partie de tête (81) dans le piston creux (3) correspondant au moins à la course de la soupape, de telle sorte que, dans la position médiane neutre de la tige (8), l'organe de fermeture de la soupape peut, sans déplacement de la tige (8) venir occuper chacune des deux positions de blocage.

2. Soupape de commutation selon la revendication 1, caractérisée en ce que le piston creux (3) est guidé dans le boîtier (2) de cette soupape sous l'action d'un ressort de rappel (9).

3. Soupape de commutation selon les revendications 1 ou 2, caractérisée en ce que le retour de la tige (8) dans la position de repos neutre s'effectue sous l'action de ressorts (70, 71) placés des deux côtés du boîtier de soupape/boîtier (1, 2) de la soupape de commutation, et l'un des ressorts (71) s'appuie contre la partie de tête (81) de la tige (8) l'autre ressort (70) dans la poignée de manœuvre (82) de la tige (8).

4. Soupape de commutation selon les revendications 1 ou 2 et 3, caractérisée en ce que la partie de tête (81) de la tige (8) est montée dans le piston creux (3) de façon à pouvoir s'y déplacer en étant limitée dans sa position d'insertion par un capuchon de fermeture (31) pouvant être fixé au piston creux (3).

5. Soupape de commutation selon la revendication 4, caractérisée en ce que le capuchon de fermeture (31) est soudé ou collé avec le piston creux (3).

Fig.1

Fig.2